# EUROPÄISCHE PATENTSCHRIFT

(11) **EP 3 434 561 B1**
(45) Veröffentlichungstag und Bekanntmachung des Hinweises auf die Patenterteilung: **06.07.2022**
(21) Anmeldenummer: 18185090.0
(22) Anmeldetag: 24.07.2018
(51) Int. Cl.: B62D 15/02, G08G 1/14

(54) **EINPARKEN MIT FAHRZEUGINFORMATION EINES NEBENFAHRZEUGS**
PARKING WITH VEHICLE INFORMATION OF A SECONDARY VEHICLE
STATIONNEMENT AU MOYEN D'INFORMATION D'UN VÉHICULE AUXILIAIRE

(30) Priorität: 25.07.2017 DE 102017116753
(43) Veröffentlichungstag der Anmeldung: 30.01.2019
(73) Patentinhaber: Valeo Schalter und Sensoren GmbH, 74321 Bietigheim-Bissingen (DE)
(72) Erfinder: Blinkle, Frank, 74321 Bietigheim-Bissingen (DE)
(74) Vertreter: Pothmann, Karsten

(56) Entgegenhaltungen:
- DE-A1-102009 054 292
- DE-A1-102009 057 647
- DE-A1-102012 024 151
- DE-A1-102014 219 876
- US-A1- 2015 039 173

## Beschreibung

Die vorliegende Erfindung betrifft ein Verfahren zum Einparken eines Fahrzeugs in einer Parklücke, umfassend die Schritte Erfassen einer potentiellen Parklücke mit dem Fahrzeug und Aufbauen einer Kommunikationsverbindung zu wenigstens einem neben der potentiellen Parklücke geparkten Nebenfahrzeug.

Auch betrifft die vorliegende Erfindung ein Fahrassistenzsystem für ein Fahrzeug zur Durchführung des obigen Verfahrens.

Des Weiteren betrifft die vorliegende Erfindung ein Fahrzeug mit einem obigen Fahrassistenzsystem.

Assistiertes Einparken ist in aktuellen Fahrzeugen ein wichtiges Thema. Verschiedenartige Fahrassistenzsysteme sind bekannt, die einem Fahrer eines Fahrzeugs Unterstützung beim Einparken bereitstellen. Solche Fahrassistenzsysteme reichen von Systemen zur Bestimmung eines Abstands zu einem Hindernis über Systeme zur automatischen Erkennung einer Parklücke und Systeme zur automatischen Berechnung und Anzeige einer Trajektorie für einen Parkvorgang bis hin zu vollautomatischen Fahrassistenzsystemen, die selbständig eine Parklücke erkennen oder eine Parkplatzinformation von einem Server erhalten, und das Fahrzeug autonom in der Parklücke parken.

Solche Fahrassistenzsysteme sind bereits weit verbreitet im Einsatz und werden von vielen Fahrzeugführern als Erleichterung angesehen, weil die Fahrassistenzsysteme bereits mit einer großen Zuverlässigkeit funktionieren und das Einparken oft als schwierig empfunden wird.

Allerdings gibt es teilweise noch Verbesserungsbedarf. Dies betrifft beispielsweise den Fall, dass das Fahrzeug in einer Parklücke zwischen zwei Nebenfahrzeugen oder mit einem Nebenfahrzeug auf zumindest einer Seite geparkt werden soll. Dies betrifft sowohl das Parken in Reihe, wobei die Fahrzeuge hintereinander geparkt werden, wie auch das Parken nebeneinander, entweder gerade oder schräg. Hier können verschiedene Situationen auftreten, die von den bisher verfügbaren Fahrassistenzsystemen nicht oder nur unbefriedigend abgehandelt werden können, so das ein Eingreifen des Fahrzeugführers erforderlich werden kann.

Beispielsweise kann es vorkommen, dass eine potentielle Parklücke identifiziert wird, aufgrund von ein- oder aussteigenden Passagieren bei einem Nebenfahrzeug aber ein Einparken in der Parklücke aber nicht möglich ist. Geöffnete Türen wie auch die ein- bzw. aussteigenden Passagiere selber können hier zumindest temporäre Hindernisse darstellen. Aktuelle Fahrassistenzsysteme können dabei meist nicht zwischen solchen temporären Hindernissen und permanenten Hindernissen unterscheiden. Auch kann ein ein- oder ausparkendes Fahrzeug eine Verfügbarkeit einer potentiellen Parklücke beeinflussen. In derartigen Situationen kann es vorkommen, dass eine Parklücke nicht korrekt identifiziert wird, oder auch eine falsche Identifizierung einer Parklücke erfolgt. Auch kann eine Parkposition in der Parklücke falsch bestimmt werden. Darüber hinaus kann das Einparken in unerwünschter Weise verlängert werden, wenn beispielsweise das Fahrassistenzsystem wiederholt neue Trajektorien zum Einparken des Fahrzeugs bestimmen muss.

In diesem Zusammenhang ist aus der DE 10 2011 003 886 A1 eine Vorrichtung für ein Fahrzeug zum Senden einer Fahrsituationsinformation bekannt. Die Vorrichtung umfasst eine Auswerteeinheit zur Ermittlung eines Parkvorgangs des Fahrzeugs mittels Auswertung einer oder mehrerer Fahrzeugzustandsgrößen und durch eine Kommunikationseinheit zum Senden von Informationen über den ermittelten Parkvorgang.

Auch ist aus der DE 10 2012 024 151 A1 Die Erfindung betrifft eine Vorrichtung zur Unterstützung des Einparkens eines Kraftfahrzeuges mit wenigstens einer Sensoranordnung zur Erkennung der Umgebung des Kraftfahrzeuges, sowie einer Kommunikationsvorrichtung, die eine Kommunikation zwischen zwei Kraftfahrzeugen ermöglicht, bekannt. Dabei ist eine mit der Sensoranordnung und der Kommunikationsvorrichtung gekoppelte Steuerungsanordnung vorgesehen, die mittels der Kommunikationsvorrichtung zur Absendung eines Signals an in der Nähe des einzuparkenden Kraftfahrzeuges befindliche Kraftfahrzeuge ausgebildet ist. Außerdem sind ein entsprechend ausgerüstetes Kraftfahrzeug sowie ein Verfahren zur Unterstützung des Einparkens eines Kraftfahrzeuges bekannt.

Die DE 10 2014 224 788 A1 betrifft ein System zur Warnung des Fahrers eines zweiten Fahrzeugs durch ein erstes, abgestelltes bzw. parkendes Fahrzeug. Um ein solches System bereitstellen wird im abgestellten bzw. geparkten Zustand des ersten Fahrzeugs mindestens eine am oder im ersten Fahrzeug vorgesehene erste Objekterkennungsvorrichtung vorgesehen, die bei Erkennung eines sich bewegenden ersten Objekts eine erste Signalvorrichtung zur Erzeugung mindestens eines Warnsignals betätigt. Durch die betätigte erste Signalvorrichtung wird der Fahrer des sich dem ersten Fahrzeug nähernden zweiten Fahrzeugs vor dem sich bewegenden ersten Objekt gewarnt.

Weiterhin ist aus der DE 10 2015 214 610 A1 ein Verfahren zum Auffinden eines Parkplatzes für ein erstes Kraftfahrzeug bekannt. Der Parkplatz ist an einer Seite durch ein zweites Kraftfahrzeug begrenzt. Das Verfahren umfasst Schritte des Bestimmens einer erforderlichen Mindestlänge eines Parkplatzes, auf dem das erste Kraftfahrzeug einparken kann, des Abtastens, durch das zweite Kraftfahrzeug, einer Länge des angrenzenden Parkplatzes; und des Führens des ersten Kraftfahrzeugs zu dem durch das zweite Kraftfahrzeug begrenzten Parkplatz, falls die Länge dieses Parkplatzes wenigstens der Mindestlänge entspricht.

Die DE 10 2009 057647 A1 zeigt ein Verfahren zum Betreiben eines Kraftfahrzeugs mit einer Schnittstelle, die ausgebildet ist zur Kommunikation mit einem weiteren Kraftfahrzeug, bei dem Daten und/oder eine Rangieranforderung im Zusammenhang mit einer Einpark- oder Ausparkanforderung des Kraftfahrzeugs oder noch eines weiteren Kraftfahrzeugs bei Vorhandensein der Einpark- beziehungsweise Ausparkanforderung über die Schnittstelle an das weitere Kraftfahrzeug ausgegeben werden. DE 10 2009 057647 A1 offenbart die Merkmale des Oberbegriffs der Ansprüche 1 und 9.

Die DE 10 2014 219876 A1 zeigt Verfahren zum Unterstützen eines automatischen Einparkvorganges eines Kraftfahrzeugs mit den Schritten: a) Abfragen, ob auf Basis einer Nutzervorgabe eine von der tatsächlichen Fahrzeuggröße des Kraftfahrzeugs abweichende Fahrzeuggröße für die Auswahl eines geeigneten Parkplatzes und/oder die Durchführung eines automatischen Einparkvorganges zugrundegelegt werden soll; und b) Modifizieren der Auswahl eines geeigneten Parkplatzes bzw. des Einparkvorganges in Abhängigkeit von dem Ergebnis dieser Abfrage.

Die US 2015 039173 A1 zeigt ein weiteres Verfahren zum Unterstützen eines Einparkvorgangs.

Ausgehend von dem oben genannten Stand der Technik liegt der Erfindung somit die Aufgabe zugrunde, ein Verfahren zum Einparken eines Fahrzeugs in einer Parklücke, ein Fahrassistenzsystem für ein Fahrzeug zur Durchführung dieses Verfahrens sowie ein Fahrzeug mit einem solchen Fahrassistenzsystem anzugeben, die ein einfaches und zuverlässiges Einparken eines Fahrzeugs bei einer Parklücke mit wenigstens einem Nebenfahrzeug ermöglichen.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß ist somit ein Verfahren zum Einparken eines Fahrzeugs in einer Parklücke angegeben, umfassend die Schritte Erfassen einer potentiellen Parklücke mit dem Fahrzeug, Aufbauen einer Kommunikationsverbindung zu wenigstens einem neben der potentiellen Parklücke geparkten Nebenfahrzeug, Empfangen von einer Fahrzeuginformation des wenigstens einen Nebenfahrzeugs betreffend die potenzielle Parklücke über die Kommunikationsverbindung, Identifizieren einer Parklücke unter Berücksichtigung der potentiellen Parklücke und der Fahrzeuginformation des wenigstens einen Nebenfahrzeugs betreffend die potenzielle Parklücke, und Einparken des Fahrzeugs in der Parklücke.

Erfindungsgemäß ist außerdem ein Fahrassistenzsystem für ein Fahrzeug zur Durchführung des obigen Verfahrens angegeben.

Weiter ist erfindungsgemäß ein Fahrzeug mit einem obigen Fahrassistenzsystem angegeben.

Grundidee der vorliegenden Erfindung ist es also, durch eine Kommunikation mit wenigstens einem Nebenfahrzeug Fahrzeuginformationen in Bezug auf die potentielle Parklücke zu erhalten, die ein Identifizieren der Parklücke unter Berücksichtigung dieser Fahrzeuginformation zuverlässig ermöglichen. Damit können insbesondere durch das wenigstens eine Nebenfahrzeug bedingte temporäre Belegungen oder Beeinträchtigungen der potentiellen Parklücke als solche erkannt werden, so dass eine Parklücke basierend auf der potentiellen Parklücke und den Fahrzeuginformationen identifiziert werden kann, auch wenn die potentielle Parklücke allein noch nicht zur Identifikation als Parklücke ausreicht, da sie beispielsweise keine ausreichende Breite aufweist. Dies kann der Fall sein, wenn das Nebenfahrzeug beispielsweise eine seiner Türen im Bereich der potentiellen Parklücke geöffnet hat. Somit bilden von dem Fahrzeug gesammelte Informationen lediglich eine Basis für das Erfassen der potentiellen Parklücke. Die potentielle Parklücke muss als solche somit noch nicht zum Parken des Fahrzeugs geeignet sein. Die Eignung der potentiellen Parklücke zur Parklücke wird dann unter Berücksichtigung der Fahrzeuginformationen überprüft, um schließlich die Parklücke zu identifizieren.

Das Aufbauen einer Kommunikationsverbindung zu dem wenigstens einem neben der potentiellen Parklücke geparkten Nebenfahrzeug betrifft eine prinzipiell beliebige Kommunikationsverbindung zur Übertragung von Daten. Es können prinzipiell beliebige Übertragungsstandards und -wege verwendet werden. Das Nebenfahrzeug kann dabei beispielsweise über sein Kennzeichen, eine beliebige anderer Art der Kennung und/oder über eine Spezifikation einer Position identifiziert werden. Auch kann nach der Art einer Broadcast-Nachricht eine Kommunikation in einem lokalen Bereich erfolgen, wobei die Kommunikation auf den lokalen Bereich beschränkt sein kann.

Das Empfangen von einer Fahrzeuginformation des wenigstens einen Nebenfahrzeugs betreffend die potenzielle Parklücke über die Kommunikationsverbindung betrifft jegliche Art von Information, die für die Benutzung der Parklücke relevant sein kann, Insbesondere Informationen über eine Belegung oder Blockade der Parklücke durch das Nebenfahrzeug können hier übertragen werden. Entsprechende Belegungen können insbesondere beim Ein- und Aussteigen von Passagieren oder beim Beladen des Nebenfahrzeugs auftreten und sind typischerweise temporärer Natur. Damit können solche Hindernisse nicht nur als solche von dem Fahrzeug erfasst werden, sondern über die entsprechenden Fahrzeuginformationen auch als temporär erkannt werden. Dabei können auch Informationen in Bezug auf eine Sitzbelegung des Nebenfahrzeugs als Fahrzeuginformation übertragen werden. Damit kann beispielsweise bei einem kürzlich geparkten Nebenfahrzeug überprüft werden, ob bereits alle Insassen das Nebenfahrzeug verlassen haben. Entsprechendes gilt umgekehrt beim Verlassen der Parklücke.

Das Identifizieren einer Parklücke unter Berücksichtigung der potentiellen Parklücke und der Fahrzeuginformation des wenigstens einen Nebenfahrzeugs betreffend die potenzielle Parklücke betrifft eine Überprüfung der Eignung der potentiellen Parklücke zum Parken des Fahrzeugs. Dabei kann durch die Fahrzeuginformation die Eignung als Parklücke sowohl verbessert wie auch verschlechtert werden.

Das Aufbauen einer Kommunikationsverbindung zu wenigstens einem neben der potentiellen Parklücke geparkten Nebenfahrzeug und das Empfangen von einer Fahrzeuginformation des wenigstens einen Nebenfahrzeugs betreffend die potenzielle Parklücke über die Kommunikationsverbindung können als Voreinstellung immer durchgeführt werden, oder nur bei Bedarf, beispielsweise wenn eine potentielle Parklücke eine Breite oder Länge aufweist, die für das Parken des Fahrzeugs nicht ausreicht, oder ähnliches.

Das Einparken des Fahrzeugs in der Parklücke erfolgt entweder durch den Fahrzeugführer, oder autonom durch das Fahrzeug bzw. das Assistenzsystem des Fahrzeugs. Das Einparken kann somit entweder als assistiertes Einparken oder auch vollständig autonom erfolgen.

Das Erfassen einer potentiellen Parklücke mit dem Fahrzeug kann prinzipiell auf verschiedene Weise erfolgen. Beispielsweise kann das Fahrzeug von einer Servereinrichtung zur Bereitstellung von Parklückeninformationen eine Information über eine potentielle Parklücke erhalten, beispielsweise mit einer Positionsangabe der potentiellen Parklücke.

Einzelne Schritte des erfindungsgemäßen Verfahrens können prinzipiell in an sich beliebiger Reihenfolge durchgeführt werden, wie ein Fachmann offensichtlich erkennt. Beispielsweise ist es nicht erforderlich, dass der Schritt des Erfassen einer potentiellen Parklücke mit dem Fahrzeug abgeschlossen wird, bevor die Kommunikationsverbindung zu dem wenigstens einem neben der potentiellen Parklücke geparkten Nebenfahrzeug aufgebaut wird und die Fahrzeuginformation des wenigstens einen Nebenfahrzeugs betreffend die potenzielle Parklücke empfangen werden. So können bereits während des Erfassens der potentiellen Parklücke Verbindungen zu Nebenfahrzeugen aufgebaut und über diese Verbindungen Fahrzeuginformation des wenigstens einen Nebenfahrzeugs empfangen werden. Dadurch ist es möglich, entsprechende Informationen bereits frühzeitig in dem Verfahren zu verwenden, beispielsweise beim Erfassen der potentiellen Parklücke.

In vorteilhafter Ausgestaltung der Erfindung umfasst der Schritt des Erfassens einer potentiellen Parklücke mit dem Fahrzeug eine Überwachung einer Umgebung des Fahrzeugs mit wenigstens einem Umgebungssensor. Der wenigstens eine Umgebungssensor kann ein prinzipiell beliebiger Sensor sein. Auch kann eine Mehrzahl gleichartiger oder unterschiedlicher Einzelsensoren zusammen einen Umgebungssensor bilden. Der wenigstens eine Umgebungssensor kann beispielsweise einen oder mehrere aus einer Gruppe von einem Ultraschallsensor, einer Kamera, einem lidarbasierten Sensor, insbesondere einem Laserscanner, einem Radarsensor, oder anderen umfassen, mit denen eine Umgebung des Fahrzeugs auf Hindernisse überprüft werden kann. Vorzugsweise werden die Informationen des wenigstens einen Umgebungssensors mit Positionsinformationen des Fahrzeugs und Karteninformationen zu der Position des Fahrzeugs kombiniert, um eine potentielle Parklücke zu erfassen. So können beispielsweise existierende Parklücken über die Positionsinformationen des Fahrzeugs und die entsprechenden Karteninformationen identifiziert und mit dem wenigstens einen Umgebungssensor auf Verfügbarkeit überprüft werden.

In vorteilhafter Ausgestaltung der Erfindung umfasst der Schritt des Aufbauens einer Kommunikationsverbindung zu wenigstens einem neben der potentiellen Parklücke geparkten Nebenfahrzeug ein Aufbauen der Kommunikationsverbindung über ein Kommunikationsnetz, insbesondere ein Mobilfunknetz. Entsprechend wird die Kommunikationsverbindung als Netzverbindung aufgebaut, beispielsweise über eine Internetverbindung. Als Identifikation des Nebenfahrzeugs kann beispielsweise ein Kennzeichen des Nebenfahrzeugs erfasst werden, beispielsweise mit einer Kamera. Das Mobilfunknetz kann ein beliebiges Mobilfunknetz nach einem der Standards 2G, auch bekannt als GSM, 2,5G, auch bekannt als GPRS, 3G, auch bekannt als UMTS, 4G, auch bekannt als LTE, 5G oder höher sein. Auch andere Übertragungsnetze können prinzipiell verwendet werden. Die Kommunikationsverbindung wird typischerweise über einen Kommunikationsserver aufgebaut, oder der Kommunikationsserver stellt Verbindungsdaten für einen unmittelbaren Aufbau der Kommunikationsverbindung zu dem Nebenfahrzeug über das Kommunikationsnetz bereit.

In vorteilhafter Ausgestaltung der Erfindung umfasst der Schritt des Aufbauens einer Kommunikationsverbindung zu wenigstens einem neben der potentiellen Parklücke geparkten Nebenfahrzeug ein Aufbauen der Kommunikationsverbindung unmittelbar zu dem wenigstens einem neben der potentiellen Parklücke geparkten Nebenfahrzeug, insbesondere nach einem Kurzreichweitenfunkstandard wie Bluetooth, Wireless LAN, oder ähnlichen. Mit dem Kurzreichweitenfunkstandard können Nebenfahrzeuge einfach kontaktiert werden, indem beispielsweise eine allgemeine Anfrage an verfügbare Nebenfahrzeuge gesendet wird. Antwortende Nebenfahrzeuge können sich dann mit einer Antwortnachricht identifizieren, so dass eine Verbindung zu einem gewünschten Nebenfahrzeug aufgebaut werden kann. Prinzipiell kann auch beim Verbindungsaufbau bereits eine Identifikation des gewünschten Nebenfahrzeugs verwendet werden, so dass nur dieses Nebenfahrzeug antwortet. Die Identifikation kann beispielsweise ein Kennzeichen des Nebenfahrzeugs oder ein anderes, eindeutiges Identifikationsmittel sein. Aufgrund der beschränkten Reichweite des Kurzreichweitenfunkstandards ist es ausreichend, wenn das Identifikationsmittel eine lokale Zuordnung ermöglicht.

Erfindungsgemäß umfasst der Schritt des Identifizierens einer Parklücke ein Identifizieren wenigstens eines Hindernisses im Bereich der Parklücke, wobei das wenigstens eine Hindernis basierend auf der empfangenen Fahrzeuginformation als temporäres Hindernis identifiziert wird. Das temporäre Hindernis bewirkt eine temporäre Blockade der Parklücke, beispielsweise durch einen beweglichen Teil des Nebenfahrzeugs, beispielsweise eine geöffnete Seitentür oder eine Heckklappe, einen Fahrradträger, oder ähnliches. Das Nebenfahrzeug kann somit mit den Fahrzeuginformationen beispielsweise signalisieren, dass eine Tür des Nebenfahrzeugs geöffnet ist. Diese Information kann von dem Fahrzeug einem erkannten Hindernis in der Parklücke zugeordnet werden, so dass das Fahrzeug die Parklücke prinzipiell als solche identifiziert, und lediglich die temporäre Verfügbarkeit beschränkt ist. Das Einparken kann somit verzögert werden, bis die temporäre Verfügbarkeit hergestellt wurde. Auch kann das Nebenfahrzeug einen bevorstehenden Ausparkvorgang signalisieren, beispielsweise wenn das Nebenfahrzeug bereits entsperrt wurde und/oder der Motor gestartet wurde und/oder bereits ein Fahrzeugführer auf dem Fahrersitz sitzt, aber das Nebenfahrzeug noch nicht seine Parklücke verlassen hat. Während des Ausparkens ist üblicherweise davon auszugehen, dass das Nebenfahrzeug beispielsweise die Parklücke kreuzt oder schneidet, weshalb ein gleichzeitiges Einparken des Fahrzeugs nicht durchgeführt werden sollte oder zumindest einen größeren Abstand zum ausparkenden Nebenfahrzeug erfordert.

In vorteilhafter Ausgestaltung der Erfindung umfasst der Schritt des Identifizierens einer Parklücke ein Bestimmen einer Parkposition des Fahrzeugs in der Parklücke unter Berücksichtigung des wenigstens einen, temporären Hindernisses. Temporäre Hindernisse können beispielsweise eine geöffnete Fahrzeugtür oder Fahrzeugklappe des Nebenfahrzeugs darstellen. Entsprechendes gilt für das Nebenfahrzeug selber. Beim Bestimmen einer Parkposition können verschiedene Faktoren berücksichtigt werden. Hierzu gehören beispielsweise eine Markierung der Parklücke, ein Abstand zu Nebenfahrzeugen, eine Ausrichtung des Fahrzeugs, Rangiermöglichkeiten des Fahrzeugs entlang einer Trajektorie zum Einparken des Fahrzeugs, oder ähnliche. Auch temporäre Hindernisse können entsprechend berücksichtigt werden. Beispielsweise können temporäre Hindernisse als solche identifiziert werden, damit die Parkposition nicht ausgehend von einer Position des temporären Hindernisses, sondern ausgehend von einer Position des Nebenfahrzeugs selbst bestimmt wird. Es wird also berücksichtigt, dass das temporäre Hindernis wieder entfernt wird. Entsprechend kann das Fahrzeug näher an dem Nebenfahrzeug geparkt werden, als es ausgehend von dem temporären Hindernis erfolgen würde. Auch stellt das Nebenfahrzeug als solches ein temporäres Hindernis dar. Daher kann also, wenn von dem Nebenfahrzeug ein Ein-oder Ausparken signalisiert wird, die Parkposition entsprechend anderes bestimmt werden. Beispielsweise kann, wenn das Nebenfahrzeug "Ausparken" signalisiert, die Parkposition anhand einer Parklückenmarkierung bestimmt werden, um mit der Parklückenmarkierung möglichst exakt übereinzustimmen. Überschneidungen des Nebenfahrzeugs mit einer Parklückenmarkierung können daher unberücksichtigt bleiben. Entsprechendes gilt, wenn das Nebenfahrzeug "Einparken" signalisiert. In diesem Fall kann die Parkposition derart bestimmt werden, dass das Fahrzeug zusammen mit dem Nebenfahrzeug einen zur Verfügung stehenden Platz möglichst gleichmäßig nutzt.

In vorteilhafter Ausgestaltung der Erfindung umfasst der Schritt des Identifizierens einer Parklücke ein Identifizieren einer temporären Verfügbarkeit der Parklücke, und der Schritt des Einparkens des Fahrzeugs in der Parklücke umfasst ein Einparken des Fahrzeugs bei Erreichen der temporären Verfügbarkeit der Parklücke. Die temporäre Verfügbarkeit betrifft eine temporäre Blockade der Parklücke, entweder durch das Nebenfahrzeug selbst oder durch einen beweglichen Teil des Nebenfahrzeugs, beispielsweise eine geöffnete Seitentür. Das Nebenfahrzeug kann somit mit den Fahrzeuginformationen beispielsweise signalisieren, dass eine Tür des Nebenfahrzeugs geöffnet ist. Dies kann von dem Fahrzeug so einem erkannten Hindernis in der Parklücke zugeordnet werden, dass das Fahrzeug die Parklücke prinzipiell als solche identifiziert, und lediglich die temporäre Verfügbarkeit beschränkt ist, das Einparken kann somit verzögert werden, bis die temporäre Verfügbarkeit wiederhergestellt ist. Auch kann das Nebenfahrzeug einen bevorstehenden Ausparkvorgang signalisieren, beispielsweise wenn das Nebenfahrzeug bereits entsperrt wurde und/oder der Motor gestartet wurde, dass Nebenfahrzeug aber noch nicht seine Parklücke verlassen hat. Während des Ausparkens ist üblicherweise davon auszugehen, dass das Nebenfahrzeug beispielsweise die Parklücke kreuzt oder schneidet, weshalb ein gleichzeitiges Einparken des Fahrzeugs nicht durchgeführt werden kann. Das Einparken wird also verzögert, bis die Parklücke für das Fahrzeug verfügbar ist.

In vorteilhafter Ausgestaltung der Erfindung umfasst das Verfahren einen zusätzlichen Schritt eines Übertragens einer identifizierten Parklücke an eine Servereinrichtung zur Bereitstellung von Parklückeninformationen. Somit können Parklücken also solche identifiziert und ihre Existenz unabhängig von Ihrer Belegung erfasst und gespeichert werden. Darüber hinaus kann aber auch eine Belegung der Parklücke, oder auch einer benachbarten Parklücke durch Ein-oder Ausparken des Nebenfahrzeugs, gemeldet und über die Servereinrichtung anderen Verkehrsteilnehmern zur Verfügung gestellt werden. Andere Verkehrsteilnehmer können die Parklückeninformationen entsprechend von dem Server abrufen. Die Servereinrichtung ist über eine beliebige Kommunikationsverbindung mit dem Fahrzeug verbindbar, beispielsweise eine Mobilfunkverbindung nach einem prinzipiell beliebigen Standard, beispielsweise 2G, auch bekannt als GSM, 2,5G, auch bekannt als GPRS, 3G, auch bekannt als UMTS, 4G, auch bekannt als LTE, 5G oder höher.

In vorteilhafter Ausgestaltung der Erfindung umfasst das Verfahren einen zusätzlichen Schritt eines Signalisierens eines Beginns des Einparkens des Fahrzeugs in der Parklücke an das wenigstens eine Nebenfahrzeug über die Kommunikationsverbindung. Dadurch kann das Nebenfahrzeug gewarnt werden. Auch kann das Nebenfahrzeug veranlasst werden, beispielsweise eine geöffnete Fahrzeugklappe oder Fahrzeugtür zu schließen, entweder selbsttätig oder durch Ausgabe einer entsprechenden Aufforderung an den Fahrzeugführer oder einen anderen Insassen des Nebenfahrzeugs. Die Signalisierung kann beispielsweise über eine Kommunikationsverbindung nach einem Kurzreichweitenfunkstandard wie Bluetooth, Wireless LAN, oder ähnlichen erfolgen, indem entsprechende Nachrichten an alle Nebenfahrzeuge gesendet werden. Alternativ oder zusätzlich kann die Signalisierung nach der Art einer Broadcast-Nachricht erfolgen, die von allen Nebenfahrzeugen empfangen werden kann. Dabei ist bereits aufgrund der beschränkten Reichweite des Kurzreichweitenfunkstandards gewährleistet, dass nur Nebenfahrzeuge in der Nähe die Nachricht empfangen können. Alternativ kann die Signalisierung über eine Kommunikationsverbindung als Netzverbindung erfolgen, beispielsweise über ein beliebiges Mobilfunknetz nach einem der Standards 2G, auch bekannt als GSM, 2,5G, auch bekannt als GPRS, 3G, auch bekannt als UMTS, 4G, auch bekannt als LTE, 5G oder höher. Auch andere Übertragungsnetze können prinzipiell verwendet werden. Die Kommunikationsverbindung wird dabei typischerweise über einen Kommunikationsserver aufgebaut, oder der Kommunikationsserver stellt Verbindungsdaten für einen unmittelbaren Aufbau der Kommunikationsverbindung zu dem Nebenfahrzeug über das Kommunikationsnetz bereit.

In vorteilhafter Ausgestaltung der Erfindung umfasst das Fahrassistenzsystem einen Umgebungssensor zum Erfassen einer potentiellen Parklücke, eine Kommunikationseinrichtung zum Aufbauen einer Kommunikationsverbindung und Empfangen von einer Fahrzeuginformation, und eine Steuerungseinheit zum Identifizieren einer Parklücke und zum Einparken des Fahrzeugs.

Nachfolgend wird die Erfindung unter Bezugnahme auf die anliegende Zeichnung anhand bevorzugter Ausführungsformen näher erläutert.

Es zeigt
- Fig. 1: eine schematische Ansicht eines Fahrzeugs mit einem Fahrassistenzsystem gemäß einer ersten, bevorzugten Ausführungsform in Draufsicht,
- Fig. 2: ein Ablaufdiagramm eines Verfahrens zum Einparken des Fahrzeugs aus Fig. 1 in einer Parklücke in Übereinstimmung mit der ersten Ausführungsform,
- Fig. 3: eine schematische Ansicht des Fahrzeugs aus Fig. 1 gemäß eines ersten Anwendungsbeispiels während der Durchführung des Verfahrens aus Fig. 2 beim Erfassen einer potentiellen Parklücke zum Parken seitlich nebeneinander in Draufsicht,
- Fig. 4: eine schematische Ansicht des Fahrzeugs aus Fig. 1 gemäß des ersten Anwendungsbeispiels während der Durchführung des Verfahrens aus Fig. 2 beim Identifizieren einer Parklücke zum Parken seitlich nebeneinander in Draufsicht,
- Fig. 5: eine schematische Ansicht des Fahrzeugs aus Fig. 1 gemäß eines zweiten Anwendungsbeispiels während der Durchführung des Verfahrens aus Fig. 2 beim Erfassen einer potentiellen Parklücke zum Parken in Reihe in Draufsicht, und
- Fig. 6: eine schematische Ansicht des Fahrzeugs aus Fig. 1 gemäß des zweiten Anwendungsbeispiels während der Durchführung des Verfahrens aus Fig. 2 beim Identifizieren einer Parklücke zum Parken in Reihe in Draufsicht,

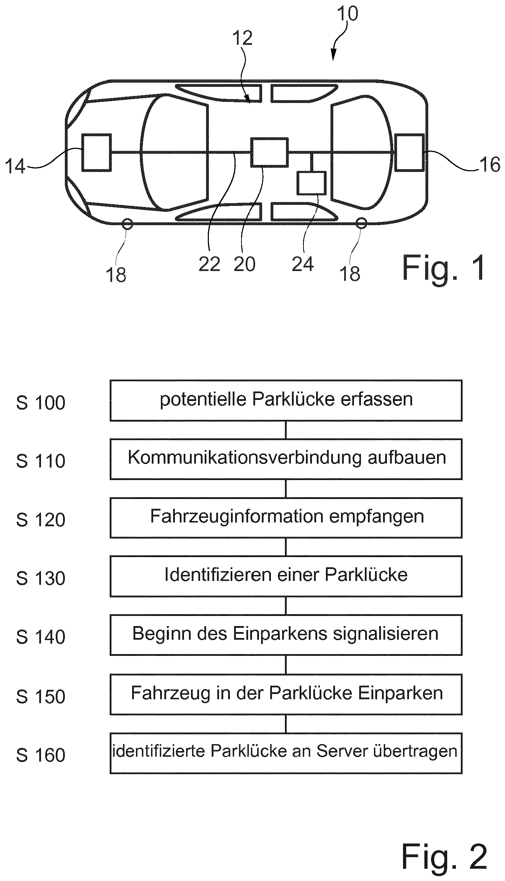

Die Figur 1 zeigt ein Fahrzeug 10 mit einem Fahrassistenzsystem 12 gemäß einer ersten, bevorzugten Ausführungsform.

Das Fahrassistenzsystem 12 umfasst in diesem Ausführungsbeispiel eine Frontkamera 14, eine Heckkamera 16, und eine Mehrzahl Ultraschallsensoren 18, die gemeinsam als Umgebungssensoren 14, 16, 18 Umgebungsinformationen in einem Bereich um das Fahrzeug 10 erfassen. Von den Ultraschallsensoren 18 sind in Fig. 1 lediglich zwei dargestellt. Allerdings sind in dem ersten Ausführungsbeispiel zusätzliche, in Fig. 1 nicht dargestellte Ultraschallsensoren 18 vorgesehen, die entlang einer Außenkontur des Fahrzeugs 10 angeordnet sind und einen Umgebungsbereich des Fahrzeugs 10 vollständig erfassen.

Das Fahrassistenzsystem 12 umfasst weiterhin eine Steuerungseinheit 20, die über einen Kommunikationsbus 22 mit der Frontkamera 14, der Heckkamera 16 und den Ultraschallsensoren 18 verbunden ist. Der Kommunikationsbus 22 ist in diesem Ausführungsbeispiel ein im Automobilbereich üblicher CAN-Bus. Prinzipiell sind aber auch andere Bussysteme ohne Einschränkung verwendbar.

Weiterhin umfasst das Fahrassistenzsystem 12 eine Kommunikationseinrichtung 24 zum Aufbauen einer Kommunikationsverbindung. Die Kommunikationseinrichtung 24 ist ebenfalls über den Kommunikationsbus 22 mit der Steuerungseinheit 20 verbunden. In diesem Ausführungsbeispiel ist die Kommunikationseinrichtung 24 zum Aufbauen der Kommunikationsverbindung nach einem Kurzreichweitenfunkstandard wie Bluetooth, Wireless LAN, oder ähnlichen ausgeführt. In einem alternativen Ausführungsbeispiel ist die Kommunikationseinrichtung 24 alternativ oder zusätzlich zum Aufbauen der Kommunikationsverbindung über ein Mobilfunknetz und zur Kommunikation über das Mobilfunknetz ausgeführt. Das Mobilfunknetz kann ein beliebiges Mobilfunknetz nach einem der Standards 2G, auch bekannt als GSM, 2,5G, auch bekannt als GPRS, 3G, auch bekannt als UMTS, 4G, auch bekannt als LTE, 5G oder höher sein. Entsprechendes gilt für die Kommunikationseinrichtung 24.

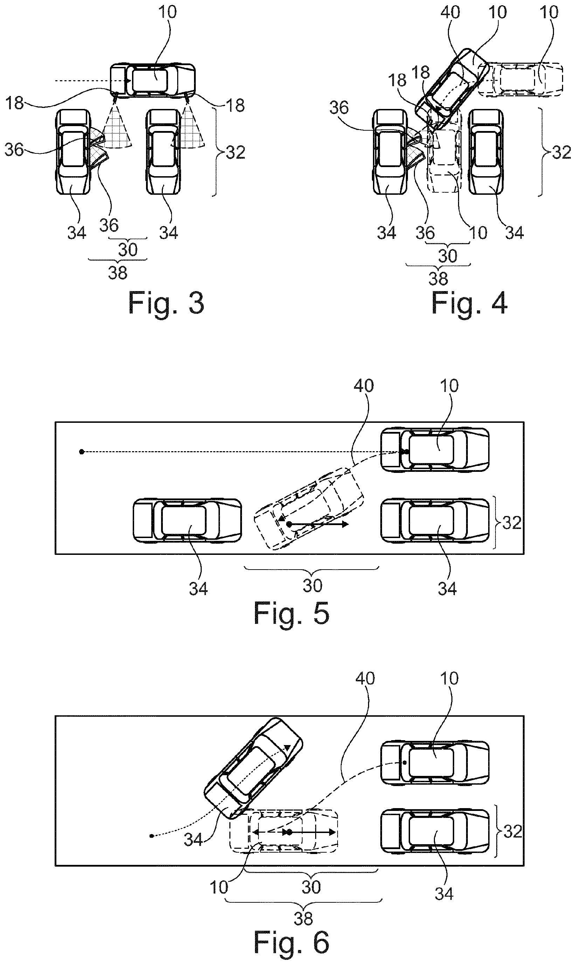

Nachstehend wird ein Verfahren zum Einparken eines Fahrzeugs 10 in einer Parklücke 38 unter Bezug auf das Ablaufdiagram in Fig. 2 in Übereinstimmung mit der ersten Ausführungsform beschrieben. Das Verfahren des ersten Ausführungsbeispiels wird unter Bezug auf ein erstes Anwendungsbeispiel, das in den Figuren 3 und 4 dargestellt ist, und ein zweites Anwendungsbeispiel, das in den Figuren 5 und 6 dargestellt ist, erläutert. Beide Anwendungsbeispiele betreffen das Verfahren des ersten Ausführungsbeispiels und werden mit dem Fahrzeug 10 des ersten Ausführungsbeispiels durchgeführt.

Das Verfahren beginnt mit einem ersten Schritt S100, wonach mit dem Fahrzeug 10 eine potentielle Parklücke 30 erfasst wird. Dazu wird in diesem Ausführungsbeispiel eine Umgebung des Fahrzeugs 10 mit dem Umgebungssensor 14, 16, 18 überwacht. Wie beispielsweise in Fig. 3 unter Bezug auf das erste Anwendungsbeispiel dargestellt ist, wird dabei im Vorbeifahren ein Randbereich 32 mit den Ultraschallsensoren 18 überwacht, wobei die potentielle Parklücke 30 erfasst wird. Die potentielle Parklücke 30 befindet sich zwischen zwei Nebenfahrzeugen 34. Die Nebenfahrzeuge 34 sind hier seitlich nebeneinander in dem Randbereich 32 geparkt. Ein Nebenfahrzeug 34 hat zu der potentiellen Parklücke 30 geöffnete Seitentüren 36, welche eine verfügbare Breite der potentiellen Parklücke 30 zwischen den Nebenfahrzeugen 34 begrenzen. Entsprechendes ist für ein Parken der Nebenfahrzeuge 34 in Reihe hintereinander in Fig. 5 unter Bezug auf das zweite Anwendungsbeispiel dargestellt.

In Schritt S110 wird von der Steuerungseinrichtung 20 eine Kommunikationsverbindung zu wenigstens einem neben der potentiellen Parklücke 30 geparkten Nebenfahrzeug 34 aufgebaut. Die Kommunikationsverbindung wird über die Kommunikationseinrichtung 24 als Datenverbindung aufgebaut. In diesem Ausführungsbeispiel wird die Kommunikationsverbindung über die Kommunikationseinrichtung 24 unmittelbar zu dem neben der potentiellen Parklücke 30 geparkten Nebenfahrzeug 34 aufgebaut. Dazu wird eine Broadcast-Nachricht versendet, die von allen Nebenfahrzeugen 34 in der Umgebung des Fahrzeugs 10 empfangen werden kann. Diese Nebenfahrzeuge 34 antworten auf die Broadcast-Nachricht mit einer Kennung, die hier ein Kennzeichen des jeweiligen Nebenfahrzeugs 34 beinhaltet. Das Fahrzeug 10 identifiziert das Nebenfahrzeug 34 über die Kennung, indem es ein an dem Nebenfahrzeug 34 angebrachtes Kennzeichenschild mit der Front- oder Heckkamera 14, 16 erfasst, um so die Kommunikationsverbindung zu dem Nebenfahrzeug 34 aufzubauen. Alternativ wird in der Broadcast-Nachricht das Kennzeichen des Nebenfahrzeugs 34 versendet, so dass nur dieses Nebenfahrzeug 34 auf die Broadcast-Nachricht antwortet.

Gemäß der bereits oben erwähnten alternativen Ausführungsform mit der Kommunikationseinrichtung 24, die zum Aufbauen der Kommunikationsverbindung und zur Kommunikation über das Mobilfunknetz ausgeführt ist, wird die Kommunikationsverbindung als Netzverbindung über eine Internetverbindung aufgebaut. Auch hier wird das Kennzeichen des Nebenfahrzeugs 34 erfasst. Die Kommunikationsverbindung wird über einen Kommunikationsserver aufgebaut.

In diesem Ausführungsbeispiel werden der Schritt S120 wie auch der nachfolgend beschriebene Schritt S130 immer durchgeführt, wenn eine potentielle Parklücke 30 erfasst wurde. Alternativ werden die Schritte S120 und S130 nur durchgeführt, wenn die potentielle Parklücke 30 eine Breite oder Länge aufweist, die für das Parken des Fahrzeugs 10 nicht ausreicht.

Schritt S120 betrifft ein Empfangen von einer Fahrzeuginformation des wenigstens einen Nebenfahrzeugs 34 betreffend die potenzielle Parklücke 30 über die Kommunikationsverbindung. Die Fahrzeuginformation betreffen in Übereinstimmung mit dem ersten Anwendungsbeispiel aus Fig. 3 eine Information, dass die Seitentüren 36 des Nebenfahrzeugs 34 zu der potentiellen Parklücke 30 geöffnet sind. Die Seitentüren 36 stellen somit ein temporäres Hindernis 36 dar, welches beim Schließen der Seitentüren 36 automatisch beseitigt wird. In dem in Fig. 5 dargestellten zweiten Anwendungsbeispiel betreffen die Fahrzeuginformation eine Information, dass das Nebenfahrzeug 34 abfahren und seine Position verlassen wird. Hier ist das Nebenfahrzeug 34 selber das Hindernis, welches durch das Verlassen seiner Position die potentielle Parklücke 30 vergrößert. Die Fahrzeuginformation wird von der Kommunikationseinrichtung 24 des Fahrzeugs 10 empfangen und über den Kommunikationsbus 22 an die Steuerungseinheit 20 zur weiteren Verarbeitung übertragen.

Schritt S130 erfolgt ein Identifizieren einer Parklücke 38 unter Berücksichtigung der potentiellen Parklücke 30 und der von dem Nebenfahrzeug 34 übertragenen Fahrzeuginformation betreffend die potenzielle Parklücke 30. Das Identifizieren der Parklücke 38 erfolgt durch die Steuerungseinheit 20. Entsprechend überprüft die Steuerungseinheit 20 eine Eignung der potentiellen Parklücke 30 zum Parken des Fahrzeugs 10.

Entsprechend wird in Übereinstimmung mit dem ersten Anwendungsbeispiel der Figuren 3 und 4 die Seitentür 36 des Nebenfahrzeugs 34 als solche erkannt und als temporäres Hindernis 36 identifiziert. Somit kann die Steuerungseinheit 20 eine Trajektorie 40 zum Einparken des Fahrzeugs 10 bereits bei geöffneter Seitentür 36 bestimmen, um das Fahrzeug 10 in einer Parkposition mittig zwischen den beiden Nebenfahrzeugen 34 einzuparken. In Fig. 4 ist unter Bezug auf das erste Anwendungsbeispiel eine Parkposition eingezeichnet, wie sie sich ausgehend von dem temporären Hindernis 36 ergibt. Die Parkposition ist näher an einem in Fig. 4 rechten Nebenfahrzeug 34. Bei Kenntnis des temporären Hindernisses 36 wird die Parkposition trotz der geöffneten Seitentür 36 mittig zwischen den beiden Nebenfahrzeugen 34 bestimmt.

In Übereinstimmung mit dem zweiten Anwendungsbeispiel der Figuren 5 und 6 wurde in Schritt S100 die potentielle Parklücke 30 erfasst. Die von dem Nebenfahrzeug 34 übermittelte Fahrzeuginformation betrifft ein bevorstehendes Ausparken des Nebenfahrzeugs 34. Entsprechend kann eine Parklücke 38 unter Berücksichtigung des zusätzlichen, von dem Nebenfahrzeug 34 freigegebenen Platzes identifiziert werden, in der das Fahrzeug 10 einparken kann. Entsprechend wird die Parkposition unter Berücksichtigung des ausgeparkten Nebenfahrzeugs 34 bestimmt. Außerdem wird das Einparken verzögert, bis die temporäre Verfügbarkeit hergestellt ist, d.h. bis das Nebenfahrzeug 34 ausgeparkt wurde.

Schritt S140 umfasst einen optionalen Schritt eines Signalisierens eines Beginns des Einparkens des Fahrzeugs 10 in der Parklücke 36 an das wenigstens eine Nebenfahrzeug 34 über die Kommunikationsverbindung. Dadurch kann das Nebenfahrzeug 34 gewarnt werden. Auch kann das Nebenfahrzeug 34 veranlasst werden, beispielsweise eine geöffnete Fahrzeugklappe oder Fahrzeugtür 36 zu schließen, entweder selbsttätig oder durch Ausgabe einer entsprechenden Aufforderung an den Fahrzeugführer oder einen anderen Insassen des Nebenfahrzeugs 34. Die Signalisierung kann beispielsweise über eine Kommunikationsverbindung nach einem Kurzreichweitenfunkstandard wie Bluetooth, Wireless LAN, oder ähnlichen erfolgen, indem entsprechende Nachrichten an alle Nebenfahrzeuge 34 gesendet werden. Alternativ oder zusätzlich kann die Signalisierung nach der Art einer Broadcast-Nachricht erfolgen, die von allen Nebenfahrzeugen 34 empfangen werden kann. Dabei ist bereits aufgrund der beschränkten Reichweite des Kurzreichweitenfunkstandards gewährleistet, dass nur Nebenfahrzeuge 34 in der Nähe die Nachricht empfangen können. Alternativ kann die Signalisierung über eine Kommunikationsverbindung als Netzverbindung erfolgen, beispielsweise über ein beliebiges Mobilfunknetz nach einem der Standards 2G, auch bekannt als GSM, 2,5G, auch bekannt als GPRS, 3G, auch bekannt als UMTS, 4G, auch bekannt als LTE, 5G oder höher. Auch andere Übertragungsnetze können prinzipiell verwendet werden. Die Kommunikationsverbindung wird dabei typischerweise über einen Kommunikationsserver aufgebaut, oder der Kommunikationsserver stellt Verbindungsdaten für einen unmittelbaren Aufbau der Kommunikationsverbindung zu dem Nebenfahrzeug 34 über das Kommunikationsnetz bereit.

In Schritt S150 erfolgt ein Einparken des Fahrzeugs 10 in der Parklücke 38. Das Einparken des Fahrzeugs 10 in der Parklücke 38 erfolgt in diesem Ausführungsbeispiel autonom durch das Fahrassistenzsystem 12 des Fahrzeugs 10. Entsprechend steuert das Fahrassistenzsystem 12 das Fahrzeug 10 selbsttätig entlang der Trajektorie 40 in die Parklücke 38.

In Schritt S160 erfolgt ein Übertragen der identifizierten Parklücke 38 an eine Servereinrichtung zur Bereitstellung von Parklückeninformationen. Die Übertragung umfasst eine Übertragung einer Position der identifizierten Parklücke 38 unabhängig von Ihrer Belegung. Zusätzlich wird auch eine aktuelle Belegung der Parklücke 38 an die Servereinrichtung übertragen. Außerdem wird eine benachbarte Parklücke entsprechend übertragen, wobei sich eine Belegung durch Ein- oder Ausparken des Nebenfahrzeugs 34 gemäß der empfangenen Fahrzeuginformation ergibt. Die Servereinrichtung ist über die oben aufgebaute Kommunikationsverbindung mit dem Fahrzeug 10 verbindbar. Schritt S160 ist optional und kann zu einem prinzipiell beliebigen Zeitpunkt durchgeführt werden.

### Bezugszeichenliste

- 10: Fahrzeug
- 12: Fahrassistenzsystem
- 14: Frontkamera
- 16: Heckkamera
- 18: Ultraschallsensor, Umgebungssensor
- 20: Steuerungseinheit, Umgebungssensor
- 22: Kommunikationsbus, Umgebungssensor
- 24: Kommunikationseinrichtung
- 30: potentielle Parklücke
- 32: Randbereich
- 34: Nebenfahrzeug
- 36: Seitentür, temporäres Hindernis
- 38: Parklücke
- 40: Trajektorie

## Patentansprüche

1. Verfahren zum Einparken eines Fahrzeugs (10) in einer Parklücke (34), umfassend die Schritte
Erfassen einer potentiellen Parklücke (30) mit dem Fahrzeug (10),
Aufbauen einer Kommunikationsverbindung zu wenigstens einem neben der potentiellen Parklücke (30) geparkten Nebenfahrzeug (34),
Empfangen von einer Fahrzeuginformation des wenigstens einen Nebenfahrzeugs (34) betreffend die potenzielle Parklücke (30) über die Kommunikationsverbindung, Identifizieren einer Parklücke (38) unter Berücksichtigung der potentiellen Parklücke (30) und der Fahrzeuginformation des wenigstens einen Nebenfahrzeugs (34) betreffend die potenzielle Parklücke (30), und
Einparken des Fahrzeugs (10) in der Parklücke (38) wobei der Schritt des Identifizierens einer Parklücke (38) ein Identifizieren wenigstens eines Hindernisses (36) im Bereich der Parklücke (38) umfasst,
**dadurch gekennzeichnet, dass**
das wenigstens eine Hindernis (36) basierend auf der empfangenen Fahrzeuginformation als temporäres Hindernis (36) identifiziert wird, wobei das temporäres Hindernis (36) eine geöffnete Fahrzeugtür oder Fahrzeugklappe des Nebenfahrzeugs (34) ist.

2. Verfahren nach Anspruch 1, **dadurch gekennzeichnet, dass**
der Schritt des Erfassens einer potentiellen Parklücke (30) mit dem Fahrzeug (10) eine Überwachung einer Umgebung des Fahrzeugs (10) mit wenigstens einem Umgebungssensor (14, 16, 18) umfasst.

3. Verfahren nach einem der vorhergehenden Ansprüche 1 oder 2, **dadurch gekennzeichnet, dass**
der Schritt des Aufbauens einer Kommunikationsverbindung zu wenigstens einem neben der potentiellen Parklücke (30) geparkten Nebenfahrzeug (34) ein Aufbauen der Kommunikationsverbindung über ein Kommunikationsnetz, insbesondere ein Mobilfunknetz, umfasst.

4. Verfahren nach einem der vorhergehenden Ansprüche, **dadurch gekennzeichnet, dass**
der Schritt des Aufbauens einer Kommunikationsverbindung zu wenigstens einem neben der potentiellen Parklücke (30) geparkten Nebenfahrzeug (34) ein Aufbauen der Kommunikationsverbindung unmittelbar zu dem wenigstens einem neben der potentiellen Parklücke (30) geparkten Nebenfahrzeug (34), insbesondere nach einem Kurzreichweitenfunkstandard wie Bluetooth, Wireless LAN, oder ähnlichen, umfasst.

5. Verfahren nach Anspruch 1, **dadurch gekennzeichnet, dass**
der Schritt des Identifizierens einer Parklücke (38) ein Bestimmen einer Parkposition des Fahrzeugs (10) in der Parklücke (38) unter Berücksichtigung des wenigstens einen, temporären Hindernisses (36) umfasst.

6. Verfahren nach einem der vorhergehenden Ansprüche, **dadurch gekennzeichnet, dass**
der Schritt des Identifizierens einer Parklücke (38) ein Identifizieren einer temporären Verfügbarkeit der Parklücke (38) umfasst, und
der Schritt des Einparkens des Fahrzeugs (10) in der Parklücke (38) ein Einparken des Fahrzeugs (10) bei Erreichen der temporären Verfügbarkeit der Parklücke (38) umfasst.

7. Verfahren nach einem der vorhergehenden Ansprüche, **dadurch gekennzeichnet, dass**
das Verfahren einen zusätzlichen Schritt eines Übertragens einer identifizierten Parklücke (38) an eine Servereinrichtung zur Bereitstellung von Parklückeninformationen umfasst.

8. Verfahren nach einem der vorhergehenden Ansprüche, **dadurch gekennzeichnet, dass**
das Verfahren einen zusätzlichen Schritt eines Signalisierens eines Beginns des Einparkens des Fahrzeugs (10) in der Parklücke (38) an das wenigstens eine Nebenfahrzeug (34) über die Kommunikationsverbindung umfasst.

9. Fahrassistenzsystem (12) für ein Fahrzeug (10) zur Durchführung des Verfahrens nach einem der vorhergehenden Ansprüche.

10. Fahrassistenzsystem (10) nach Anspruch 9, **dadurch gekennzeichnet, dass** das Fahrassistenzsystem (10) einen Umgebungssensor (14, 16, 18) zum Erfassen einer potentiellen Parklücke (30), eine Kommunikationseinrichtung (24) zum Aufbauen einer Kommunikationsverbindung und Empfangen von einer Fahrzeuginformation, und eine Steuerungseinheit (20) zum Identifizieren einer Parklücke (38) und zum Einparken des Fahrzeugs (10) umfasst.

11. Fahrzeug (10) mit einem Fahrassistenzsystem (12) nach einem der vorhergehenden Ansprüche 9 oder 10.

## Claims

1. Method for parking a vehicle (10) in a parking space (34), comprising the steps of
detecting a potential parking space (30) with the vehicle (10),
setting up a communication connection to at least one auxiliary vehicle (34) parked beside the potential parking space (30),
receiving vehicle information from the at least one auxiliary vehicle (34) relating to the potential parking space (30) via the communication connection, identifying a parking space (38) taking into account the potential parking space (30) and the vehicle information from the at least one auxiliary vehicle (34) relating to the potential parking space (30), and
parking the vehicle (10) in the parking space (38), wherein the step of identifying a parking space (38) comprises identifying at least one obstacle (36) in the region of the parking space (38), **characterized in that**
the at least one obstacle (36) is identified as a temporary obstacle (36) on the basis of the received vehicle information, wherein the temporary obstacle (36) is an open vehicle door or vehicle flap of the auxiliary vehicle (34).

2. Method according to Claim 1, **characterized in that**
the step of detecting a potential parking space (30) with the vehicle (10) comprises monitoring an environment of the vehicle (10) using at least one environmental sensor (14, 16, 18).

3. Method according to either of the preceding Claims 1 and 2, **characterized in that**
the step of setting up a communication connection to at least one auxiliary vehicle (34) parked beside the potential parking space (30) comprises setting up the communication connection via a communication network, in particular a mobile radio network.

4. Method according to one of the preceding claims, **characterized in that**
the step of setting up a communication connection to at least one auxiliary vehicle (34) parked beside the potential parking space (30) comprises setting up the communication connection directly to the at least one auxiliary vehicle (34) parked beside the potential parking space (30), in particular according to a short-range radio standard such as Bluetooth, wireless LAN or the like.

5. Method according to Claim 1, **characterized in that**
the step of identifying a parking space (38) comprises determining a parking position of the vehicle (10) in the parking space (38) taking into account the at least one temporary obstacle (36).

6. Method according to one of the preceding claims, **characterized in that**
the step of identifying a parking space (38) comprises identifying a temporary availability of the parking space (38), and
the step of parking the vehicle (10) in the parking space (38) comprises parking the vehicle (10) when the temporary availability of the parking space (38) is achieved.

7. Method according to one of the preceding claims, **characterized in that**
the method comprises an additional step of transmitting an identified parking space (38) to a server device for providing parking space information.

8. Method according to one of the preceding claims, **characterized in that**
the method comprises an additional step of signalling a beginning of the operation of parking the vehicle (10) in the parking space (38) to the at least one auxiliary vehicle (34) via the communication connection.

9. Driving assistance system (12) for a vehicle (10) for carrying out the method according to one of the preceding claims.

10. Driving assistance system (10) according to Claim 9, **characterized in that**
the driving assistance system (10) comprises an environmental sensor (14, 16, 18) for detecting a potential parking space (30), a communication device (24) for setting up a communication connection and receiving vehicle information, and a control unit (20) for identifying a parking space (38) and for parking the vehicle (10).

11. Vehicle (10) having a driving assistance system (12) according to either of the preceding Claims 9 and 10.

## Revendications

1. Procédé pour faire entrer en stationnement un véhicule (10) dans un emplacement de stationnement (34), comprenant les étapes suivantes :
détection d'un emplacement de stationnement potentiel (30) avec le véhicule (10),
établissement d'une liaison de communication avec au moins un véhicule voisin (34) stationné à côté de l'emplacement de stationnement potentiel (30),
réception d'une information de véhicule de l'au moins un véhicule voisin (34) concernant l'emplacement de stationnement potentiel (30) par le biais de la liaison de communication,
identification d'un emplacement de stationnement potentiel (38) en tenant compte de l'emplacement de stationnement potentiel (30) et de l'information de véhicule de l'au moins un véhicule voisin (34) concernant l'emplacement de stationnement potentiel (30), et
entrée en stationnement du véhicule (10) dans l'emplacement de stationnement (38), l'étape d'identification d'un emplacement de stationnement (38) comprenant une identification d'au moins un obstacle (36) dans la zone de l'emplacement de stationnement (38),
**caractérisé en ce que**
l'au moins un obstacle (36) est identifié en tant qu'obstacle temporaire (36) sur la base de l'information de véhicule reçue, l'obstacle temporaire (36) étant une portière de véhicule ouverte ou un capot de véhicule ouvert du véhicule voisin (34).

2. Procédé selon la revendication 1, **caractérisé en ce que** l'étape de détection d'un emplacement de stationnement potentiel (30) avec le véhicule (10) comprend une surveillance d'un environnement du véhicule (10) avec au moins un capteur d'environnement (14, 16, 18) .

3. Procédé selon l'une des revendications précédentes, **caractérisé en ce que** l'étape d'établissement d'une liaison de communication avec au moins un véhicule voisin (34) stationné à côté de l'emplacement de stationnement potentiel (30) comprend un établissement de la liaison de communication par le biais d'un réseau de communication, notamment un réseau radio mobile.

4. Procédé selon l'une des revendications précédentes, **caractérisé en ce que** l'étape d'établissement d'une liaison de communication avec au moins un véhicule voisin (34) stationné à côté de l'emplacement de stationnement potentiel (30) comprend un établissement de la liaison de communication directement avec l'au moins un véhicule voisin (34) stationné à côté de l'emplacement de stationnement potentiel (30), notamment selon une norme radioélectrique de courte portée comme Bluetooth, LAN sans fil ou similaire.

5. Procédé selon la revendication 1, **caractérisé en ce que** l'étape d'identification d'un emplacement de stationnement (38) comprend une détermination d'une position de stationnement du véhicule (10) dans l'emplacement de stationnement (38) en tenant compte de l'au moins un obstacle temporaire (36).

6. Procédé selon l'une des revendications précédentes, **caractérisé en ce que** l'étape d'identification d'un emplacement de stationnement (38) comprend une identification d'une disponibilité temporaire de l'emplacement de stationnement (38) et l'étape d'entrée en stationnement du véhicule (10) dans l'emplacement de stationnement (38) comprend une entrée en stationnement du véhicule (10) lorsque la disponibilité temporaire de l'emplacement de stationnement (38) est atteinte.

7. Procédé selon l'une des revendications précédentes, **caractérisé en ce que** le procédé comprend une étape supplémentaire d'une transmission d'un emplacement de stationnement (38) identifié à un dispositif serveur en vue de fournir des informations d'emplacement de stationnement.

8. Procédé selon l'une des revendications précédentes, **caractérisé en ce que** le procédé comprend une étape supplémentaire d'une signalisation d'un début de l'entrée en stationnement du véhicule (10) dans l'emplacement de stationnement (38) à l'au moins un véhicule voisin (34) par le biais de la liaison de communication.

9. Système d'aide à la conduite (12) pour un véhicule (10) destiné à mettre en œuvre le procédé selon l'une des revendications précédentes.

10. Système d'aide à la conduite (10) selon la revendication 9, **caractérisé en ce que** le système d'aide à la conduite (10) comprend un capteur d'environnement (14, 16, 18) destiné à détecter un emplacement de stationnement potentiel (30), un dispositif de communication (24) destiné à établir une liaison de communication et à recevoir une information de véhicule, et une unité de commande (20) destinée à identifier un emplacement de stationnement (38) et à faire entrer en stationnement le véhicule (10).

11. Véhicule (10) comprenant un système d'aide à la conduite (12) selon l'une des revendications 9 et 10.
